# EUROPEAN PATENT SPECIFICATION

(11) **EP 0 560 558 B1**
(45) Date of publication and mention of the grant of the patent: **18.12.1996**
(21) Application number: 93301741.0
(22) Date of filing: 08.03.1993
(51) Int. Cl.: G01V 1/38, G01V 1/36, G01V 1/20

(54) **Method of cancelling noise in a fluid-filled seismic streamer**
Verfahren zur Geräuschunterdrückung in einem flüssigkeitgefüllten meeresseismischen Kabel
Procédé pour supprimer le bruit dans une flûte sismique remplie de fluide

(30) Priority: 09.03.1992 NO 920922
(43) Date of publication of application: 15.09.1993
(73) Proprietor: GECO A.S., 4000 Stavanger (NO)
(72) Inventor: Bjelland, Cato, N-5150 Isdalsto (NO); Langeland, Jan-Age, N-5234 Garnes (NO)
(74) Representative: Robinson, John Stuart

(56) References cited:
- US-A- 3 860 899
- US-A- 4 821 241
- US-A- 5 251 183

## Description

The invention concerns a method of cancelling noise in a fluid-filled seismic streamer. Such noise may be caused by a peristaltic wave mode in the streamer skin and the streamer fluid filling and transmission of vibration noise takes place from a coupling via the streamer skin and by means of a particular coupled connected pulsation mode in the streamer fluid filling to a hydrophone.

During towing of a seismic streamer for marine seismic surveys, the streamer is exposed to noise of various kinds which is picked up by the hydrophones in the streamer and interferes with the seismic reflection signals which are recorded by the hydrophone. Some examples of this kind of noise are current noise generated during towing of the streamer through the water, acoustic noise from the towing vessel, and acceleration noise caused by small vertical movements of the streamer.

In bad weather the pitching and rolling of the towing vessel will cause the seismic streamer to be exposed to linear mechanical accelerations and jerks, which in turn generate a peristaltic wave mode in the streamer. Such peristaltic wave modes are also known as bulge waves, tube waves or breathing waves. The peristaltic waves are propagated in the buoyancy fluid in a waveguide mode and expose the streamer skin to stresses by generating alternate mechanical expansion and contraction of the flexible streamer skin, so-called distancibility, which again leads to a serious noise problem in the desired seismic reflection recordings. That is to say, the mechanical stress on the streamer skin generates flow phenomena in the streamer's fluid filling, i.e. the buoyancy fluid. These flow phenomena are of a periodic nature and result in velocity gradients in the fluid filling. The velocity gradients in turn give rise to a pulsing differential pressure which is detected by the hydrophones as if they were genuine seismic recording signals.

US-PS no. 4 821 241 (Berglund) discloses a method of cancelling noise which is due to peristaltic waves, by the use of stress sensors which are placed together with the hydrophones. In this patent it is stated that the well-known methods of damping vibrations, such as by the use of stretch sections and mass elements, are not entirely effective, while the various methods for the reduction of noise due to vibrations and jerks in the streamer are at best only partially effective. According to US-PS no. 4 821 241, it is therefore proposed that the presence of mechanically generated noise should be accepted, while a method is described for measuring the mechanical stress in the streamer skin and dynamically removing the noise from the desired seismic reflection signals. For each hydrophone or hydrophone group, therefore, three units are used, viz. the normal acceleration-cancelling hydrophone, the stress sensor which is in contact with the streamer skin, and a signal receiver circuit for combining the signals from the stress sensor and the hydrophone signal with opposite polarity.

The method described in US-PS no. 4 821 241 has a number of disadvantages. It requires an extra stress sensor in contact with the streamer skin for each hydrophone and in addition an active signal processing unit has to be provided for the combination of the signal from the stress sensor and the genuine hydrophone signal. In an integrated system such as a seismic streamer, it is preferable for a dynamic noise cancellation system to form an integral part of the seismic streamer as a whole.

According to the invention, there is provided a method as defined in the appended Claim 1.

Preferred embodiments of the invention are defined in the other appended claims.

It is thus possible to provide a method of the cancelling noise which is due to peristaltic waves in the skin of a fluid-filled seismic streamer while at the same time avoiding the disadvantages inherent in the prior art.

The invention will be further described by way of example, with reference to the accompanying drawing, in which:
- Fig. 1: shows schematically a section of a seismic streamer with a streamer section;
- Fig. 2: shows a noise signal due to peristaltic waves in a section of the seismic streamer;
- Fig. 3a: shows schematically a hydrophone signal before cancellation of the noise; and
- Fig. 3b: shows schematically the hydrophone signal after cancellation of the noise.

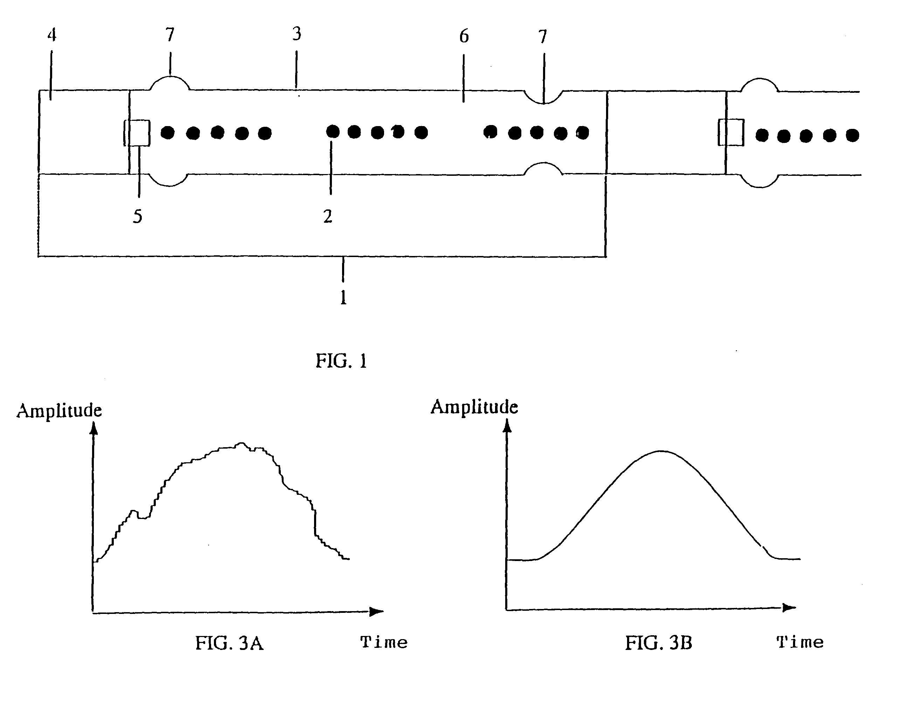

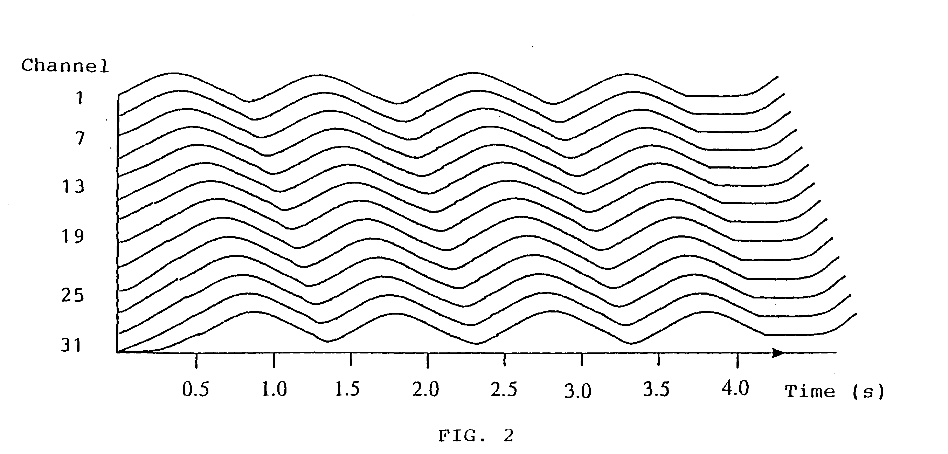

Fig. 1 shows a section of a seismic streamer with a streamer section 1 with hydrophones or hydrophone groups 2 and surrounded by a streamer skin 3. The streamer sections are interconnected by means of couplings or plugs 4 and, in each plug 4, there is provided a vibration sensor 5 in connection with the adjacent streamer section 1.

During towing through the water, the coupling or streamer plug 4 is exposed to vibrations caused by towing or by wave activity, i.e. the sea state. The vibrations in the streamer plug 4 are tramsmitted to the attached oil-filled streamer section 1 and generate a peristaltic wave mode 7 in the streamer skin 2 and the fluid filling 6 (fig. 2). To express this in a simplified manner, the wave mode in the fluid filling 6 causes a pressure pulsation, which is intercepted by the hydrophones 2 as noise and which interferes with the seismic reflection signal, i.e. the recorded signal in a hydrophone. The transmission of the vibration noise from the streamer plug 4 via a coupled mode in the fluid filling 6 as noise to the hydrophones 2 can be described by a transfer function which may be found by measuring or modelling.

The transfer function can be determined by measurement or experimentally by exposing the seismic streamer to forced vibrations which simulate the vibration effects caused by the towing or the wave activity. The vibration is intercepted by the vibration sensor 5 as a noise signal and, after transmission through the fluid filling 6, as a second noise signal (Fig. 3a) in a hydrophone 2. The transfer function can thus be calculated on the basis of the noise signal from the vibration sensor 5 and the noise signal detected by a hydrophone 2.

However, the transfer function for the transfer of the vibration signal may also be found by modelling. A peristaltic wave mode can be regarded as deterministic and almost stationary in time. A theoretical model for this wave mode can be based on physical parameters such as the thickness of the streamer skin, viscoelastic material parameters, the viscosity of the fluid filling etc., and makes use of a continuum-mechanical consideration based on the mass continuity and a motion equation for the fluid (the Navier-Stokes equation).

Viscoelastic relations, i.e. stress deformation relations, can also be applied for mechanical stress and displacement in the streamer skin. When stipulating common boundary conditions, viz. the requirement for continuity in pressure and propagation velocity inside the streamer skin, a diffusion relation can be derived in order to synthesize a transfer function.

The synthesized transfer function will provide theoretical values for the noise parameters and, if necessary, these can be corrected on the basis of measurements of the kind undertaken in connection with the experimental determination of the transfer function.

The known transfer function can now be applied to a vibration signal which is detected by the vibration sensor 5 in an actual towing situation, i.e. during the seismic survey, and it can be used in signal processing in order to remove the noise signal due to peristaltic waves in the streamer section. This type of signal processing can be conducted locally, e.g. in every streamer group, but a more rational solution is to transmit the vibration signal to the towing vessel's data processing unit via a spare channel in the seismic streamer. The noise signal can then be used together with the transfer function in the pre-processing of recorded data on board the vessel.

Thus, the noise in the recorded signal can be determined and thereafter cancelled, e.g. by means of an adaptive noise cancellation which is well-known in the art.

In this connection, it is common to use the transfer function in an optimisation process where the derived noise signal is combined with the noise-encumbered recorded signal with opposite polarity. With the noise signal and transfer function known, there are standard methods available within adaptive noise cancellation. These methods are known as least-mean-squares fit.

## Claims

1. A method of cancelling noise in a fluid-filled seismic streamer, where the noise is due to a peristaltic wave mode (7) in a skin (3) of the streamer and the fluid filling (6) of the streamer, transfer of vibration noise taking place from a coupling (4) via the streamer skin and a particular connected pulsation mode in the fluid filling (6) to a hydrophone (2), characterized by providing at least one vibration sensor (5) in each coupling (4) in the seismic streamer, deriving a transfer function for the transfer of the vibration noise, measuring a noise signal detected as a source signal in one or more vibration sensors (5) and as a detected signal overlying the recorded signal from one or more hydrophones (2), and applying the derived transfer function in processing the recorded signal from a hydrophone (2) in order to cancel the noise which is overlying the recorded signal in the form of the said detected noise signal, whereby the effect of noise due to peristaltic waves (7) in the streamer skin (3) and the fluid filling (6) is removed from the hydrophone signal.

2. A method according to claim 1, characterized in that the processing of the recorded signal with the transfer function is repeated in all sections (1) of the seismic streamer.

3. A method according to claim 1 or 2, characterized in that the processing of the recorded signal takes place as an adaptive cancellation.

4. A method according to any one of the preceding claims, characterized in that the transfer function is derived before a seismic survey or shot recording is initiated.

5. A method according to claim 4, characterized in that the transfer function is derived on the basis of a continuum-mechanical model of the peristaltic wave mode (7) and stress deformation relations for the streamer skin (3).

6. A method according to claim 4, characterized in that the transfer function is determined experimentally by exposing the seismic streamer to forced vibrations, so as to generate a first noise signal in one or more vibration sensors (5), the effect of the vibrations being detected as a second noise signal in one or more hydrophones (2), and the transfer function then being calculated on the basis of the first and second noise signals.

7. A method according to claim 5 or 6, characterized in that the modelled transfer function is corrected on the basis of one or more measurements performed before the seismic survey or shot recording is initiated.

8. A method according to any one of the preceding claims, characterized in that the or each vibration sensor (5) comprises an accelerometer.

## Patentansprüche

1. Verfahren zur Störungsunterdrückung in einem fluidgefüllten seismischen Streamer, wobei die Störung von einer peristaltischen Schwingung (7) in einem Mantel (3) des Streamers und in der Fluidfüllung (6) des Streamers herrührt und eine Übertragung von Vibrationsstörungen von einer Kupplung (4) über den Streamermantel und ein besonderer verbundener Pulsmodus in der Fluidfüllung (6) zu einem Unterwasserhorchgerät (2) stattfindet,
dadurch gekennzeichnet, daß
wenigstens ein Vibrationsfühler (5) in jeder Kupplung (4) in dem seismischen Streamer vorgesehen, eine Übertragungsfunktion zur Übertragung der Vibrationsstörung abgeleitet, ein Störsignal, das als ein Quellensignal in einem oder mehreren Vibrationsfühlern (5) und als ein erfaßtes, das aufgezeichnete Signal von einem oder mehreren Unterwasserhorchgeräten (2) überlagerndes Signal gemessen und die abgeleitete Übertragungsfunktion in der Verarbeitung des aufgezeichneten Signals von einem Unterwasserhorchgerät (2) angewendet wird, um die Störung zu unterdrücken, die das aufgezeichnete Signal in der Form des erfaßten Störsignals überlagert, wodurch die Auswirkung der Störung, die durch die peristaltische Schwingung (7) in dem Streamermantel (3) und der Fluidfüllung (6) hervorgerufen ist, aus dem Signal vom Unterwasserhorchgerät beseitigt wird.

2. Verfahren nach Anspruch 1, dadurch gekennzeichnet, daß die Verarbeitung des aufgezeichneten Signals mit der Übertragungsfunktion in allen Abschnitten (1) des seismischen Streamers wiederholt wird.

3. Verfahren nach Anspruch 1 oder 2, dadurch gekennzeichnet, daß die Verarbeitung des aufgezeichneten Signals als adaptive Auslöschung stattfindet.

4. Verfahren nach einem der vorangehenden Ansprüche, dadurch gekennzeichnet, daß die Übertragungsfunktion abgeleitet wird, bevor eine seismische Überwachungs- oder Schußaufzeichnung initiiert wird.

5. Verfahren nach Anspruch 4, dadurch gekennzeichnet, daß die Übertragungsfunktion auf der Basis eines mechanischen Kontinuummodells des persitaltischen Schwingungsmodus (7) und der Spannungsverformungsbeziehungen für den Streamermantel (3) abgeleitet wird.

6. Verfahren nach Anspruch 4, dadurch gekennzeichnet, daß die Übertragungsfunktion experimentell ermittelt wird, indem der seismische Streamer erzwungenen Schwingungen ausgesetzt wird, um so ein erstes Störsignal in einem oder mehreren Vibrationsfühlern (5) zu erzeugen, wobei der Effekt der Vibrationen als ein zweites Störsignal in einem oder mehreren Unterwasserhorchgeräten (2) erfaßt und die Übertragungsfunktion dann auf der Basis des ersten und zweiten Störsignals berechnet wird.

7. Verfahren nach Anspruch 5 oder 6, dadurch gekennzeichnet, daß das Modell der Übertragungsfunktion auf der Basis einer oder mehrerer Messungen korrigiert wird, die vor der Aufzeichnung einer seismischen Überwachung oder eines Schusses initiiert werden.

8. Verfahren nach einem oder mehreren der vorangehenden Ansprüche, dadurch gekennzeichnet, daß der oder die Vibrationsfühler (5) einen Beschleunigungsmesser aufweisen.

## Revendications

1. Procédé pour supprimer le bruit dans une flûte sismique remplie de fluide, lorsque le bruit est imputable à un mode d'onde péristaltique (7), dans une peau (3) de la flûte et au remplissage en fluide (6) de la flûte, le transfert du bruit de vibration se produisant depuis un couplage (4) via la peau de la flûte et un mode de pulsation particulier connecté dans le remplissage en fluide (6) à un hydrophone (2), caractérisé par le fait de prévoir au moins un capteur de vibration (5) dans chaque couplage (4) se trouvant dans la flûte sismique, la dérivation d'une fonction de transfert destinée au transfert du bruit de vibration, la mesure d'un signal de bruit, détecté à titre de signal source dans un ou plusieurs capteurs de vibration (5) et se manifestant sous forme de signal détecté chevauchant le signal enregistré venant d'un ou de plusieurs hydrophones (2), et appliquer la fonction de transfert dérivée au traitement du signal enregistré venant d'un hydrophone (2) de manière à annuler le bruit chevauchant le signal enregistré, se présentant sous la forme dudit signal de bruit détecté, de manière à ce que l'effet du bruit, imputable aux ondes péristaltiques (7) dans la peau (3) de la flûte et au remplissage en fluide (6), soit éliminé du signal d'hydrophone.

2. Procédé selon la revendication 1, caractérisé en ce que le traitement, avec la fonction de transfert, du signal enregistré est répété dans toutes les sections (1) de la flûte sismique.

3. Procédé selon la revendication 1 ou 2, caractérisé en ce que le traitement du signal enregistré a comme effet une annulation adaptative.

4. Procédé selon l'une quelconque des revendications précédentes, caractérisé en ce que la fonction de transfert est dérivée avant qu'une étude sismique ou un enregistrement de tir soit initié.

5. Procédé selon la revendication 4, caractérisé en ce que la fonction de transfert est dérivée sur la base d'un modèle continuum mécanique du mode d'onde péristaltique (7) et des relations concernant la déformation sous contrainte de la peau (3) de la flûte.

6. Procédé selon la revendication 4, caractérisé en ce que la fonction de transfert est déterminée expérimentalement, en exposant la flûte sismique à des vibrations forcées, de manière à générer un premier signal de bruit dans un ou plusieurs capteurs de vibration (5), l'effet des vibrations étant détecté, à titre de deuxième signal de bruit dans un ou plusieurs hydrophones (2), et la fonction de transfert étant ensuite calculée sur la base des premiers et deuxièmes signaux de bruit.

7. Procédé selon la revendication 5 ou 6, caractérisé en ce que la fonction de transfert modélisée est corrigée sur la base d'une ou plusieurs mesures effectuées avant l'initiation de l'étude sismique ou de l'enregistrement du tir.

8. Procédé selon l'une quelconque des revendications précédentes, caractérisé en ce que le ou chaque capteur de vibration (5) comprend un accéléromètre.
